# FASCICULE DE BREVET EUROPEEN

(11) **EP 0 777 926 B1**
(45) Date de publication et mention de la délivrance du brevet: **15.03.2000**
(21) Numéro de dépôt: 96924014.2
(22) Date de dépôt: 24.06.1996
(51) Int. Cl.: H02G 15/184, H02G 15/103

(54) **JONCTION DE CABLES DE PUISSANCE**
VERBINDUNG VON ENERGIEKABELN
JUNCTION OF POWER CABLES

(30) Priorité: 27.06.1995 FR 9507725
(43) Date de publication de la demande: 11.06.1997
(73) Titulaire: ALCATEL, 75008 Paris (FR)
(72) Inventeur: CHEENNE-ASTORINO, Annie, B-1785 Merchtem (BE); BRACKENIERS, Christophe, B-9300 Aalst (BE); CAUWEL, Johan, B-9310 Moorsel (BE)
(74) Mandataire: Buffière, Michelle
(86) Numéro de dépôt international: FR9600985
(87) Numéro de publication internationale: WO9701880

(56) Documents cités:
- FR-A- 1 506 146
- FR-A- 2 436 519
- FR-A- 2 593 335
- GB-A- 2 149 229

## Description

La présente invention porte sur une jonction de câbles de puissance.

Ces câbles électriques moyenne ou haute tension comportent chacun un conducteur, une isolation sur le conducteur, un écran semiconducteur, un écran métallique et une gaine extérieure.

Pour la jonction de deux câbles de puissance, on prépare une partie terminale de chacun d'eux pour mettre à nu successivement et sur des longueurs convenables l'écran semi-conducteur, l'isolation et le conducteur, l'écran métallique étant lui-même éventuellement mis à nu. On relie ensuite électriquement et mécaniquement les conducteurs dénudés au moyen d'un raccord. On reconstitue alors autour des conducteurs raccordés l'isolation, les écrans et en général la gaine extérieure éliminés sur les parties terminales des câbles, au moyen d'un corps de jonction entourant le raccord et s'étendant de part et d'autre de celui-ci, d'un blindage électrique sur le corps de jonction et d'une éventuelle protection extérieure recouvrant le blindage électrique et s'étendant sur l'extrémité de la gaine extérieure de chaque câble.

Des jonctions ainsi réalisées sont connues notamment par les documents FR-A-2 436 519 et US-A-4 742 184. Dans ces jonctions connues le corps de jonction est un élément tubulaire comportant au moins deux couches formées par une couche principale isolante et une couche extérieure semiconductrice.
Dans la jonction connue par le document FR-A-2 436 519, le corps de jonction est rétractable, en particulier thermiquement. Il peut comporter une couche intérieure de gradation de tension, qui est semiconductrice ou présente des caractéristiques résistives électriques non linéaires ou qui comporte un revêtement fluide tel qu'un mastic. En outre, avant la mise en place de ce corps de jonction, l'espace adjacent aux conducteurs dénudés et raccordés peut être muni d'un matériau de remplissage, qui peut être une graisse aux silicones, un mastic ou une colle fusible et peut présenter des propriétés d'isolation, conductrices ou semiconductrices, pour remplir les lacunes pouvant subsister sous le corps de jonction en place, afin de minimiser le risque de claquage dû à une ionisation de l'air dans certaines lacunes.

Dans la jonction connue par le document US-A 4742184, le corps de jonction comporte une couche intérieure semiconductrice et les câbles raccordés électriquement sont munis d'un tube fendu en élastomère semiconducteur monté sur le raccord et d'un tube en élastomère isolant monté sur l'isolation dénudée de chacun des câbles. Ces tubes adaptent entre eux le diamètre extérieur des câbles et le diamètre intérieur du corps de jonction. Ils sont choisis en conséquence selon les câbles et/ou le raccord utilisé, pour les liaisons des couches du corps de jonction avec celles correspondantes des câbles. Le tube en élastomère semiconducteur contribue aussi avec la couche intérieure semiconductrice du corps de jonction à placer en dehors de l'influence du champ électrique les intervalles d'air entre les conducteurs dénudés et raccordés et le corps de jonction. La couche intérieure semiconductrice s'étend à cet effet le long du tube en élastomère semiconducteur et sur l'extrémité en vis-à-vis de chacun des deux tubes isolants.

Ces solutions connues pour minimiser le risque de claquage dans les jonctions de câbles de puissance sont d'installation longue et/ou délicate, voire parfois dangereuse lors de l'utilisation d'une flamme pour la rétreinte du corps de jonction thermorétractable, ou peuvent bouger ou être partiellement éliminées avec la mise en place du corps de jonction quand celui-ci est mécanico-rétractable.

La présente invention a pour but une solution qui évite ces problèmes, est de pose très aisée et rapide, est adaptée à tout type de raccord utilisé et tout type de câbles concernés et améliore de manière notable la tenue de la jonction au claquage.

Elle a pour objet une jonction de câbles de puissance, comportant :
- deux câbles comprenant chacun un conducteur, une isolation, un écran semiconducteur, un écran métallique et une gaine extérieure et ayant chacun une partie terminale successivement dénudée,
- un raccord métallique reliant les conducteurs dénudés,
- un moyen au moins partiellement conducteur électriquement entourant ledit raccord,
- un corps tubulaire de jonction entourant ledit moyen et s'étendant sur les extrémités des isolations dénudées des câbles, et
- un blindage électrique entourant le corps de jonction et relié électriquement aux écrans métalliques des câbles,
caractérisée en ce que ledit moyen est constitué par une plaque composite bicouche et flexible, qui comprend une première couche en matériau semiconducteur ou conducteur et une deuxième couche en matériau non conducteur électriquement et présente une longueur au moins égale à la longueur des conducteurs dénudés et raccordés et une largeur au moins égale à la longueur périphérique dudit raccord, posée en long et enroulée autour dudit raccord avec ladite première couche au contact du raccord.

Cette jonction présente avantageusement en outre selon des modes particuliers de réalisation de l'invention au moins l'une des caractéristiques additionnelles suivantes :
- ladite plaque composite est constituée par une plaque en élastomère semiconducteur définissant ladite première couche et par une plaque de mastic définissant ladite deuxième couche, superposées et solidaires l'une de l'autre.
- ladite plaque composite est extrudée.
- ladite plaque composite est de longueur sensiblement supérieure à celle des conducteurs dénudés et raccordés et est enroulée sur les extrémités des isolations dénudées des câbles.
- la première couche a au moins l'une de ses dimensions inférieure à celle correspondante de la deuxième couche.
- la jonction comporte en outre une bande en matériau adhésif, associée à ladite plaque composite pour sa fixation en long sur le raccord.
- ledit corps de jonction comporte une couche principale isolante, une couche extérieure semiconductrice et une possible couche intérieure continue de gradation de tension en matériau de haute permittivité.
- ledit corps de jonction est un élément mécanico-rétractable.

Les avantages de la présente invention ressortiront de la description faite ci-après d'un mode préféré de réalisation donné à titre d'exemple et illustré dans le dessin ci-annexé. Dans ce dessin :
- la figure 1 représente en coupe partielle et en élévation partielle une jonction de deux câbles de puissance, selon l'invention,
- la figure 2 est une vue déployée, avant sa mise en place, d'une plaque composite de cette jonction,
- la figure 3 représente une bande en matériau adhésif, avantageusement utilisée en outre dans la jonction selon l'invention.

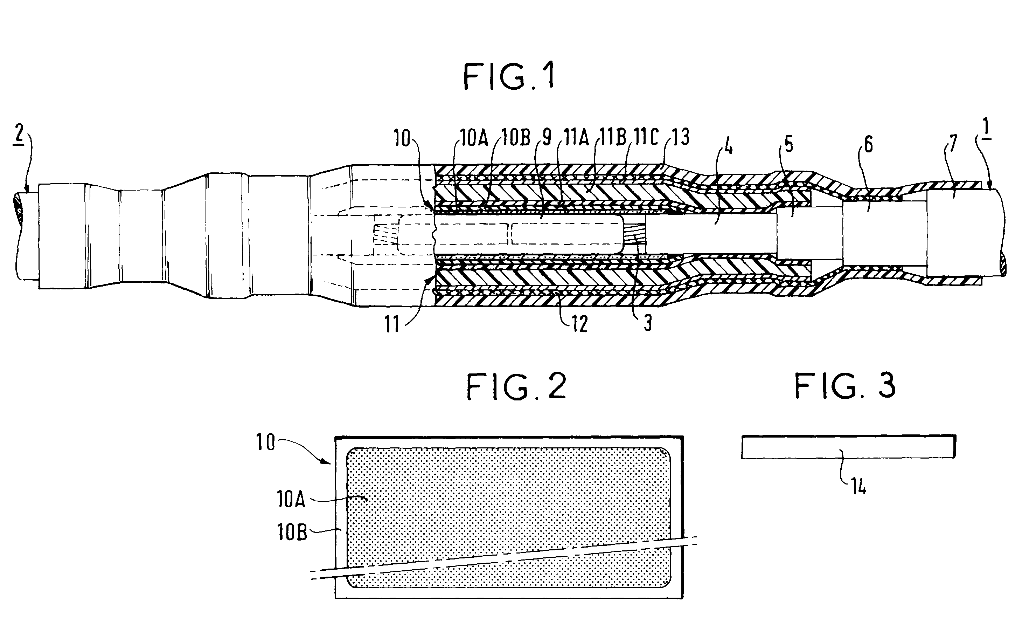

En se référant à la figure 1, on voit que la jonction de câbles de puissance, comporte deux câbles haute ou moyenne tension 1 et 2, dont les parties terminales concernées sont dénudées, raccordées l'une à l'autre et équipées pour leur reconstitution fonctionnelle.

Ainsi que visible et référencé sur le seul câble 1, chaque câble comporte un conducteur central 3, une isolation 4 entourant le conducteur avec une possible couche semiconductrice entre eux, un écran semiconducteur 5 sur l'isolation, un écran métallique 6 sur l'écran semiconducteur et une gaine de protection extérieure 7. Les parties terminales à raccorder des câbles sont dénudées par élimination successive sur des longueurs convenables de la gaine extérieure, des écrans et de l'isolation, l'écran métallique pouvant ne pas être mis à nu du dessous de la gaine extérieure.

Un raccord métallique 9, de type quelconque convenable, relie électriquement et mécaniquement les deux conducteurs dénudés des câbles.

La jonction comportant ces deux câbles ainsi raccordés comporte également une plaque composite flexible 10, qui entoure le raccord 9 et s'étend le long de ce raccord et sur l'extrémité de l'isolation dénudée de chaque câble, un corps de jonction 11 qui entoure la plaque composite en place et s'étend sur l'extrémité de l'écran semiconducteur de chaque câble, un blindage électrique 12 qui recouvre le corps de jonction et est relié électriquement aux écrans métalliques des câbles et de préférence, ainsi qu'illustré, une protection extérieure 13 qui recouvre alors le blindage et s'étend sur les extrémités des gaines des câbles.

La plaque composite 10 est bicouche et comprend une couche en matériau semiconducteur ou conducteur 10A et une couche en matériau non conducteur électriquement 10B, qui sont superposées et solidaires l'une de l'autre. La couche 10A est de préférence en matériau élastomère semiconducteur et formée par une plaque en ce matériau. La couche 10B est avantageusement formée par une plaque de mastic, de préférence de haute permittivité de l'ordre ou supérieure à 6, qui adhère directement à la plaque semiconductrice 10A. Elle peut être en élastomère très bon isolant électrique, pour lequel la plaque composite peut être obtenue par coextrusion de ses deux couches.

Cette plaque composite et flexible 10 est enroulée sur le raccord 9 et l'extrémité de l'isolation dénudée de chaque câble, en ayant sa couche semiconductrice 10A appliquée contre le raccord et en contact électrique intime avec celui-ci. Elle est prévue de longueur égale ou légèrement supérieure à la longueur globale des deux conducteurs dénudés et raccordés des câbles. Elle est également prévue de largeur égale ou supérieure à la longueur périphérique du raccord 9 utilisé et avantageusement de tout autre raccord utilisable pour ces deux câbles ou pour d'autres câbles, pour être enroulée sur au moins un tour complet autour du raccord reliant les câbles concernés. Les dimensions de la plaque composite sont définies par celles de sa couche 10B.

Le corps de jonction 11 est dans cette réalisation un élément tubulaire tricouche, qui comprend une couche intérieure de gradation de tension 11A, une couche principale intermédiaire isolante 11B et une couche extérieure semiconductrice, ces trois couches étant de même longueur et chacune d'épaisseur uniforme et étant avantageusement coextrudées. La couche intérieure de gradation de tension 11A est de préférence en élastomère à haute permittivité.

En variante, le corps de jonction est bicouche et ne comprend que la couche principale isolante et la couche extérieure semiconductrice précitées.

Le corps de jonction 11 est déformable radialement et est de préférence mécanico-rétractable.

Le blindage électrique 12 est également un élément tubulaire qui est formé par un treillis métallique élastique. La protection extérieure 13 est un manchon élastique en élastomère isolant et est de préférence mécanico-rétractable. Ce blindage électrique et cette protection extérieure sont avantageusement pré-assemblés sur le corps de jonction et l'un sur l'autre en usine, pour constituer un ensemble alors directement mis en place sur site sur les câbles raccordés et munis de la plaque 10 autour du raccord.

Un exemple de réalisation de la plaque bicouche 10 est illustré dans la figure 2, avant la mise en place de cette plaque dans la jonction. Sa couche en matériau non conducteur 10B est constituée par une plaque de mastic et sa couche en matériau semiconducteur 10A est constituée par une plaque en élastomère rendu semiconducteur, qui sont superposées l'une sur l'autre et directement solidaires. Les coins de la plaque semiconductrice sont tronqués pour être sensiblement arrondis.

Cette figure 2 montre que la plaque de mastic 10B est prévue légèrement plus large et plus longue que la plaque semiconductrice 10A. Ceci facilite la mise en place de la plaque composite 10 autour du raccord, en permettant sa retenue initiale par l'un ou son seul bord longitudinal totalement en mastic, qui adhère directement au raccord et aux extrémités des isolations dénudées des câbles, pour son enroulement alors plus aisé autour de ce raccord et des isolations. Ce bord est déformable et écrasé en long pour éviter de former une transition en marche d'escalier sur le raccord. L'autre bord longitudinal de la plaque composite est également avantageusement en mastic uniquement, pour être écrasé et éviter pareillement une autre transition extérieure en marche d'escalier le long de la plaque composite enroulée en place. Les deux bords d'extrémité de la plaque composite sont également de préférence définis uniquement par ceux de la plastique de mastic 10B, pour être écrasés sur les extrémités des isolations des câbles et ainsi définir des transitions douces entre les isolations dénudées des câbles et la plaque composite enroulée en place.

La plaque semiconductrice 10A peut être de largeur nettement inférieure à celle de la plaque de mastic 10B en étant toutefois supérieure à la largeur globale d'une ou de zones longitudinales à empreintes en creux sur la périphérie du raccord, pour recouvrir totalement et en excès cette zone ou ces zones. Elle est centrée ou non sur la largeur de la plaque de mastic 10B.

En variante par rapport à cette figure 2, les bords de la plaque de mastic et ceux de la plaque semiconductrice superposée se correspondent. Dans ces conditions, un pliage intérieur de l'un des bords longitudinaux de la plaque composite peut être réalisé ou une bande adhésive peut être utilisée pour permettre la retenue de ce bord sur le raccord et les extrémités des isolations dénudées des câbles et alors faciliter l'enroulement de la plaque composite autour d'eux.

Lorsque la plaque composite est formée de deux couches coextrudées, une bande adhésive ou un filet de colle peut être utilisé au début et à la fin de la mise en place de cette plaque composite, pour la retenue de l'un de ses bords longitudinaux sur le raccord et les extrémités des isolations dénudées des câbles et pour le maintien enroulé de la plaque composite en place.

Dans la figure 3 on a illustré une bande en matériau adhésif 14, de préférence en mastic ordinaire collant, qui est destinée à la fixation de la plaque composite précitée le long du raccord. De préférence, cette bande est en même temps utilisée pour combler des empreintes profondes sur le raccord utilisé. Elle est alors posée en long sur de telles empreintes et recouverte par la couche semiconductrice de la plaque composite, cette couche semiconductrice se fixant à la bande, pour la fixation de la bande composite, et étant de largeur et de longueur plus grandes que celles de la bande pour recouvrir totalement la bande et pour être par ailleurs en contact direct avec le raccord au moins tout autour de la bande et des éventuelles lacunes sous-jacentes pouvant subsister au niveau des empreintes.

Dans la jonction selon la figure 1, la plaque composite 10 est enroulée autour du raccord sur un simple tour complet avec recouvrement de ses bords longitudinaux. Sa plaque ou couche extérieure en matériau non conducteur électriquement 10B se trouve ainsi interposée entre le corps de jonction 11 et la plaque ou couche intérieure en matériau semiconducteur 10A. Elle permet à la fois d'éviter la présence de bulles d'air s'étendant entre le corps de jonction et la plaque ou couche intérieure en matériau semiconducteur 10A et de réduire les contraintes électriques aux extrémités de cette plaque ou couche intérieure en matériau semiconducteur 10A.

Outre la facilité et la rapidité de mise en place de la plaque composite, celle-ci présente l'avantage de ne nécessiter aucun outil de pose et ainsi donc d'éviter tout surcoût ou risque d'endommagement des câbles ou autres dangers.

Cette plaque composite prévue suffisamment large s'adapte directement à différentes sections de câbles raccordés et à différents types de raccords notamment à sertir ou boulonner pouvant être utilisés, par le simple recouvrement plus ou moins important de ses bords longitudinaux ou par son enroulement sur plusieurs tours autour du raccord utilisé.

Cette même plaque composite permet en outre l'utilisation d'un corps de jonction extrudé dépourvu de couche semiconductrice intérieure, qui lorsqu'elle est présente est éliminée le long des parties terminales du corps pour n'être laissée que sur sa partie médiane. En outre, une telle plaque composite, dont la couche en matériau non conducteur est en mastic, s'associe parfaitement à un corps de jonction mécanico-rétractable ou à l'ensemble pré-assemblé qu'il forme avec le blindage électrique et la protection extérieure, dont la pose évite l'utilisation d'une flamme susceptible de ramollir le mastic puis de le craqueler ultérieurement.

Indépendamment des avantages précédents, la jonction selon l'invention permet une amélioration très substantielle de la tenue aux claquages. Ceci est mis en évidence par des résultats de test indiqués, qui donnent les niveaux de décharges partielles avant cycles de chauffage dans des jonctions selon l'invention et dans des jonctions comparables mais comportant un tube semiconducteur ou un mastic à haute permittivité autour du raccord, à la place de la plaque composite.

Ainsi notamment, ces niveaux de décharges partielles, exprimées en pico Coulomb, restent supérieurs à 500 pC à 21 kv quand on utilise un tube semiconducteur autour d'un raccord serti et restent supérieurs à 30 pC à 21 kV et supérieurs à 50 pC à 24 kV quand on utilise un mastic à haute permittivité autour du même raccord, mais deviennent inférieurs à 5 pC à 21 kV et à 10 pC à 24 kV quand on utilise ladite plaque composite autour de ce raccord. Avec un raccord boulonné, ces niveaux restent supérieurs à 1000 pC à 21 kV, quand on utilise un tube semiconducteur autour de ce raccord, et tombent en dessous de 10 pC à 24 kV et en dessous de 5 pC à 21 kV quand on utilise la plaque composite.

## Revendications

1. Jonction de câbles de puissance, comportant :
- deux câbles (1, 2) comprenant chacun un conducteur (3), une isolation (4), un écran semiconducteur (5), un écran métallique (6) et une gaine extérieure (7) et ayant chacun une partie terminale successivement dénudée,
- un raccord métallique (9) reliant les conducteurs dénudés,
- un moyen (10) au moins partiellement conducteur électriquement entourant ledit raccord,
- un corps tubulaire (11) de jonction entourant ledit moyen et s'étendant sur les extrémités des isolations dénudées des câble (1, 2), et
- un blindage électrique (12) entourant le corps de jonction (11) et relié électriquement aux écrans métalliques (6) des câbles (1, 2),
caractérisée en ce que ledit moyen est constitué par une plaque composite bicouche et flexible (10), qui comprend une première couche (10A) en matériau semiconducteur ou conducteur et une deuxième couche (10B) en matériau non conducteur électriquement et présente une longueur au moins égale à la longueur des conducteurs dénudés et raccordés et, une largeur au moins égale à la longueur périphérique dudit raccord (9), posée en long et enroulée autour dudit raccord avec ladite première couche (10A) au contact du raccord.

2. Jonction selon la revendication 1, caractérisée en ce que ladite plaque composite (10) est constituée par une plaque en élastomère semiconducteur (10A) définissant ladite première couche et par une plaque de mastic (10B) définissant ladite deuxième couche, superposées et solidaires l'une de l'autre.

3. Jonction selon l'une des revendications 1 et 2, caractérisée en ce que ladite deuxième couche (10B) définit les dimensions de ladite plaque composite (10) et est de longueur sensiblement supérieure à celle des conducteurs dénudés et raccordés.

4. Jonction selon la revendication 3, caractérisée en ce que ladite première couche (10A) a au moins l'une de ses dimensions inférieure à la dimension correspondante de ladite deuxième couche (10B).

5. jonction selon l'une des revendications 2 à 4, caractérisée en ce que ladite plaque de mastic (10B) est en mastic à haute permittivité, au moins de l'ordre de 6.

6. Jonction selon la revendication 1, caractérisée en ce que ladite plaque composite (10) est extrudée.

7. Jonction selon l'une des revendications 1 à 6, caractérisée en ce qu'elle comporte en outre une bande en matériau adhésif (14), associée à ladite plaque composite (10) pour sa fixation en long sur ledit raccord.

8. Jonction selon la revendication 7, caractérisée en ce que ladite bande (14) est posée en long sur des empreintes extérieures en creux dudit raccord et est recouverte par ladite première couche (10A) de la plaque composite (10), ladite première couche (10A)) présentant des dimensions supérieures à celles de ladite bande (14).

9. Jonction selon l'une des revendications 2 à 8, caractérisée en ce que ledit corps de jonction (11) comporte une couche principale isolante (11B), une couche extérieure semiconductrice (11C) et une possible couche intérieure continue de gradation de tension (11A) en matériau à haute permittivité.

10. Jonction selon la revendication 9, caractérisée en ce que ledit corps de jonction (11) est un élément mécanico-rétractable

11. Jonction selon la revendication 10, caractérisée en ce que ledit corps de jonction (11), ledit blindage électrique (12) et une éventuelle protection extérieure (13) de longueur supérieure à celle dudit blindage sont constitués par un ensemble pré-assemblé et mécanico-rétractable.

## Patentansprüche

1. Verbindung von Leistungskabeln, die umfaßt:
- zwei Kabel (1, 2), die jeweils mit einem Leiter (3), einer Isolation (4), einer Halbleiterabschirmung (5), einer Metallabschirmung (6) und einer Außenhülle (7) ausgestattet sind und jeweils einen sukzessiv blank gelegten Endabschnitt aufweisen,
- eine metallische Verbindung (9), welche die beiden blanken Leiter zusammenschließt,
- ein Mittel (10), das wenigstens teilweise elektrisch leitfähig ist und die genannte Verbindung umgibt,
- ein röhrenartiger Verbindungsrumpf (11), der das genannte Mittel umgibt und sich über die Enden der blanken Isolierungen der Kabel (1, 2) erstreckt,und
- eine elektrische Panzerung (12), welche den Verbindungsrumpf (11) umgibt und mit den Metallabschirmungen (6) der Kabel (1, 2) elektrisch verbunden ist,
**dadurch gekennzeichnet, daß** das genannte Mittel durch eine zweilagige und flexible Verbundplatte (10) gebildet wird, die eine erste Lage (10A) aus einem leitenden oder halbleitenden Material und eine zweite Lage (10B) aus einem elektrisch nichtleitenden Material umfaßt, und eine Länge hat, die der Länge der blanken und verbundenen Leiter wenigstens gleich ist, und eine Breite hat, die der Umfangslänge der genannten Verbindung (9) wenigstens gleich ist, welche längs der genannten Verbindung verlegt und um diese herum gewickelt ist, wobei die genannte erste Lage (10A) mit der Verbindung in Kontakt steht.

2. Verbindung nach Anspruch 1,
**dadurch gekennzeichnet, daß** diegenannte Verbundplatte (10) durch eine Platte aus einem halbleitendem Elastomer (10A), welche die genannte erste Lage definiert, und durch eine Platte aus Kitt (10B), welche die genannte zweite Lage definiert, gebildet wird, wobei diese übereinander gelegt und aneinander befestigt sind.

3. Verbindung nach einem der Ansprüche 1 und 2,
**dadurch gekennzeichnet, daß** die genannte zweite Lage (10B) die Abmessungen der genannten Verbundplatte (10) definiert und eine Länge hat, die etwa oberhalb jener der blanken und verbundenen Leiter liegt.

4. Verbindung nach Anspruch 3,
**dadurch gekennzeichnet, daß** die genannte erste Lage (10A) wenigstens eine Abmessung aufweist, die unterhalb der entsprechenden Abmessung der genannten zweiten Lage (10B) liegt.

5. Verbindung nach einem der Ansprüche 2 bis 4,
**dadurch gekennzeichnet, daß** die genannte Platte aus Kitt (10B) aus einem Kitt hoher Permittivität, von wenigstens in der Größerordnung von 6, besteht.

6. Verbindung nach Anspruch 1,
**dadurch gekennzeichnet, daß** die genannte Verbundplatte (10) extrudiert ist.

7. Verbindung nach einem der Ansprüche 1 bis 6,
**dadurch gekennzeichnet, daß** sie außerdem einen Streifen aus einem haftenden Material (14) aufweist, der mit der genannten Verbundplatte (10) für ihre Befestigung längs auf der genannten Verbindung verbunden ist.

8. Verbindung nach Anspruch 7,
**dadurch gekennzeichnet, daß** der genannte Streifen (14) längs auf äußeren tiefen Eindrücken der genannten Verbindung verlegt ist und von der genannten ersten Lage (10A) der Verbundplatte überdeckt ist, wobei die genannte erste Lage (10A) Abmessungen aufweist, die größer sind als jene des genannten Streifens (14).

9. Verbindung nach einem der Ansprüche 2 bis 8,
**dadurch gekennzeichnet, daß** der genannte Verbindungsrumpf (11) eine isolierende Hauptlage (11B), eine halbleitende Außenlage (11C) und gegebenenfalls eine ununterbrochene Innenlage zur Spannungsabstufung (11A) aus einem Material einer hohen Permittivität aufweist.

10. Verbindung nach Anspruch 9,
dadurch gekennzeichnet, daß der genannte Verbindungsrumpf (10) ein mechanisch schrumpfbares Element ist.

11. Verbindung nach Anspruch 10,
**dadurch gekennzeichnet, daß** der genannte Verbindungsrumpf (10), die genannte elektrische Panzerung (12) und gegebenenfalls eine äußerer Schutz (13) mit einer Länge die oberhalb von jener der genannten Panzerung durch eine vormontierte und mechanisch schrumpfbare Anordnung gebildet werden.

## Claims

1. A power cable splice including:
two cables (1, 2), each of which comprises a conductor (3), insulation (4), a semiconductive screen (5), a metal screen (6), and an outer sheath (7), and has an end portion that has been stripped in successive steps;
a metal connector (9) interconnecting the stripped conductors;
means (10) that are electrically conductive at least in part and that surround said connector;
a tubular splice body (11) surrounding said means and extending over the ends of the stripped insulation of the cables (1, 2); and
electrical shielding (12) surrounding the splice body (11) and electrically connected to the metal screens (6) of the cables (1, 2);
said splice being characterized in that said means are constituted by a flexible two-layer composite plate (10) which comprises a first layer (10A) of semiconductive or conductive material, and a second layer (10B) of a material that is not electrically conductive, and which has a length not less than the length of the stripped and interconnected conductors, and a width not less than the peripheral length of said connector (9), said plate being laid along and wrapped around said connector with said first layer (10A) being in contact with the connector.

2. A splice according to claim 1, characterized in that said composite plate (10) is made up of a semiconductive elastomer plate (10A) defining said first layer, and of a mastic plate (10B) defining said second layer, the two plates being mutually superposed and secured to each other.

3. A splice according to claim 1 or 2, characterized in that said second layer (10B) defines the dimensions of said composite plate (10), and its length is significantly longer than that of the stripped and interconnected conductors.

4. A splice according to claim 3, characterized in that said first layer (10A) has at least one of its dimensions smaller than the corresponding dimension of said second layer (10B).

5. A splice according to any one of claims 2 to 4, characterized in that said mastic plate (10B) is made of a mastic having high permittivity, at least about 6.

6. A splice according to claim 1, characterized in that said composite plate (10) is extruded.

7. A splice according to any one of claims 1 to 6, characterized in that it further includes a strip (14) made of an adhesive material and associated with said composite plate (10) for fixing it along said connector.

8. A splice according to claim 7, characterized in that said strip (14) is laid along external depressions in said connector, and it is covered by said first layer (10A) of the composite plate (10), said first layer (10A) having dimensions that are larger than those of said strip (14).

9. A splice according to any one of claims 2 to 8, characterized in that said splice body (11) includes an insulating main layer (11B), a semiconductive outer layer (11C), and optionally a voltage-gradient continuous inner layer (11A) made of a material having high permittivity.

10. A splice according to claim 9, characterized in that said splice body (11) is a mechanically shrink-fittable element.

11. A splice according to claim 10, characterized in that said splice body (11), said electrical shielding (12) and any outer protection (13) of length greater than that of said shielding are constituted by a pre-assembled assembly that is mechanically shrink-fittable.
